# EUROPEAN PATENT APPLICATION

(11) **EP 1 770 637 A1**
(43) Date of publication of application: **04.04.2007**
(21) Application number: 05021439.4
(22) Date of filing: 30.09.2005
(51) Int. Cl.: G06T 7/00

(54) **Device for semi-automatic surface inspection**

(71) Applicant: MASSEN machine vision systems GmbH, 78467 Konstanz (DE)
(72) Inventor: Horrer, Andreas, 78476 Allensbach-Hegne (DE)
(74) Representative: Degwert, Hartmut

(57) **Abstract**

An automatic fail-safe visual inspection system is proposed for the inspection of the quality of a large surface in the production line and for the automatic marking of those zones in the large surface which correspond to smaller sized products produced from this large surface at a later production step. The automatic inspection system is fail-safe with regard to its own failure through an incorporated manual inspection facility which is activated as a back-up inspection means for the detection of at least those physical and aesthetical defects which can be detected by the human eye. The manual inspection back-up facility is positioned between the automatic inspection system and a marking system. A light pattern projector is installed which projects highly contrasting patterns on the large surface to visually outline the geometrical shape of the smaller sized products produced from the larger surface at a later production step. A data entry device is provided by which a manual inspector can electronically enter an identification of a particular small product location hit with a defect within the large surface being inspected. The data entry device is connected to the marking system to generate signals to trigger the marking device in replacement of the broken-down automatic inspection system, so that the large surface continues to be marked in the same way as with a correctly operating automatic vision system.

## Description

The present invention relates to an automatic visual inspection system for the inspection of a large surface in a production line.

The automatic visual inspection of the aesthetic and physical quality of multicoloured laminated or direct printed flooring boards, of decorated furniture panels, or of resilient flooring webs is today possible due to recent technological developments in camera-based surface inspection systems.

The German company MASSEN machine vision systems (www.massen.com) produces an advanced system called "ColourBrain-Laminate" which uses multiple colour and b/w cameras and associated special illuminations to detect physical and esthetical defects either on the large fullboards directly after the press. MASSEN is also producing a system for the inspection of multicoloured resilient, PVC or rubber floorings using this technology. Here the inspection is often placed over the continuous web, before this is cut into tile formats.

The German company Grecon (www.grecon.cde) uses b/w cameras to inspect the quality of fullboards after the press with its SUPERSCAN vision system.

As many defects occur at the level of the press, the direct on-panel printing, or the multicoloured web extruder, it is an advantage to place vision systems as upstream as possible along the usually highly automated production chain in order to detect quality problems as early as possible.

If a defect is detected by the camera system, the panel or web is marked with an ink-jet or with a label printer at the position of the defect in order to allow for an automatic, sensor-triggered ejection of the individual bad plank or tile once the large panel/full-board has been sawed into the smaller planks or tiles ready for packaging and shipping. These sensors may be optical sensors responsive to a UV-marking, magnetic sensors sensitive to a metallic label etc.

The reliability of these automatic vision systems must be very high as a break-down will bring the entire production to a stop. Many industrial customers ask therefore for a manual fall-back solution to keep production going on even in case of failure of the automatic inspection systems and to achieve by this way a somewhat fail-safe inspection process.

It is common practice to keep the former manual inspection post as a fall-back inspection in case of a failure of the automatic system. The operator usually marks the detected defects manually with an ink-marker so that it can be seen by the equally manual sorting personnel positioned at the end of the production line, i.e. before the packaging of the individual planks or tiles. This second manual post will remove the bad quality plank or tile either manually or by manually triggering a mechanical motorized ejection gate.

This traditional fall-back solution is costly, as it needs at least two manual inspection posts. For a laminate flooring production this is one manual post after the press and one manual post before packaging.

Another drawback of this double manual backup solution is the missing data otherwise generated by automatic inspection systems. This data can be used to control the absolute number of fullboards which must be produced for a given order which is defined as a batch with a precise number of defect-free planks (number of square-meters of defect-free planks). If the automatic inspection system breaks down, this data cannot be generated by the back-upping manual inspector, as he does not know precisely how many bad planks he has marked.

It is therefore of great interest to find a more economic solution for a manual inspection fall-back system than currently used, a solution able to compensate for the break-down of an automatic inspection system which requires not more than one manual fall-back inspection post and which is able to generate precise data on the volume of produced good products.

The present invention achieves this goal by defining an automatic fail-safe visual inspection system for the inspection of the quality of a large surface in the production line and for the automatic marking of those zones in the large surface which correspond to smaller sized products produced from this large surface at a later production step. The automatic inspection system is fail-safe with regard to its own failure through an incorporated manual inspection facility which is activated as a back-up inspection means for the detection of at least those physical and aesthetical defects which can be detected by the human eye. The manual inspection back-up facility is positioned between the automatic inspection system and a marking system. A light pattern projector is installed which projects highly contrasting patterns on the large surface to visually outline the geometrical shape of the smaller sized products produced from the larger surface at a later production step. A data entry device is provided by which a manual inspector can electronically enter an identification of a particular small product location hit with a defect within the large surface being inspected. The data entry device is connected to the marking system to generate signals to trigger the marking device in replacement of the broken-down automatic inspection system, so that the large surface continues to be marked in the same way as with a correctly operating automatic vision system.

The invention will be explained in detail with respect to an embodiment of a laminate flooring production equipped with an automatic inspection system with reference to the following figures:

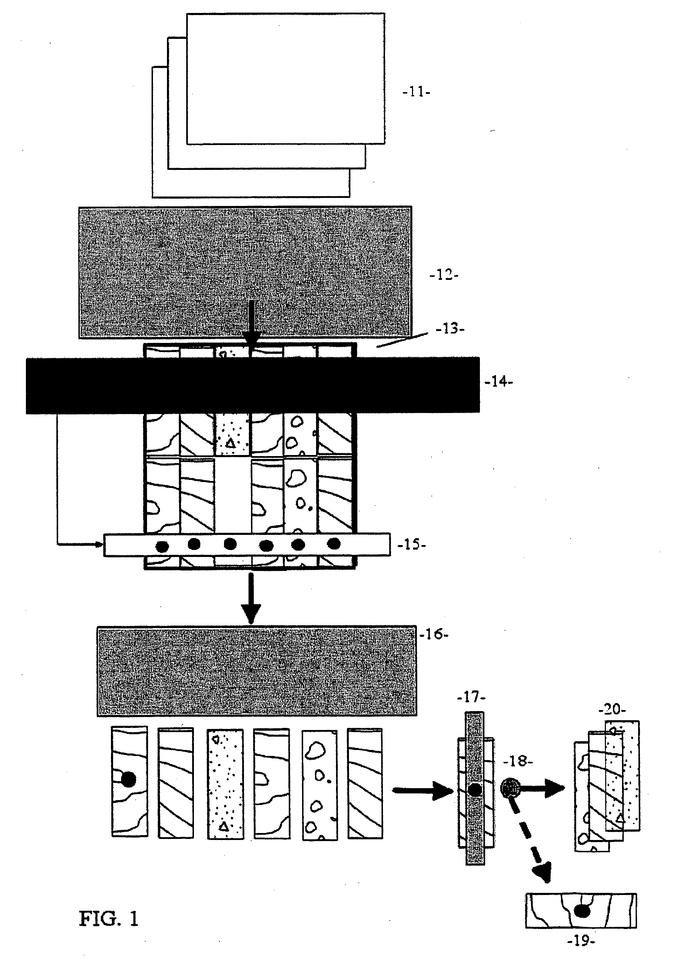

Fig. 1 is a sketch showing the technical outline of a laminate production chain with a stack of particle board, decoration-, overlay- and backing-paper entering a press -12- which produces the fullboards -13- , an automatic inspection system - 14- , a marking system -15- with six ink-jet nozzles triggered by the automatic inspection system, a cutting and profiling system -16- producing twelve smaller planks from one fullboard as two rows of six planks, an optical sensor -17- detecting the marked planks and triggering an ejection gate -18- for sorting out bad quality planks -19- prior to the automatic packaging of the good quality planks -20-.

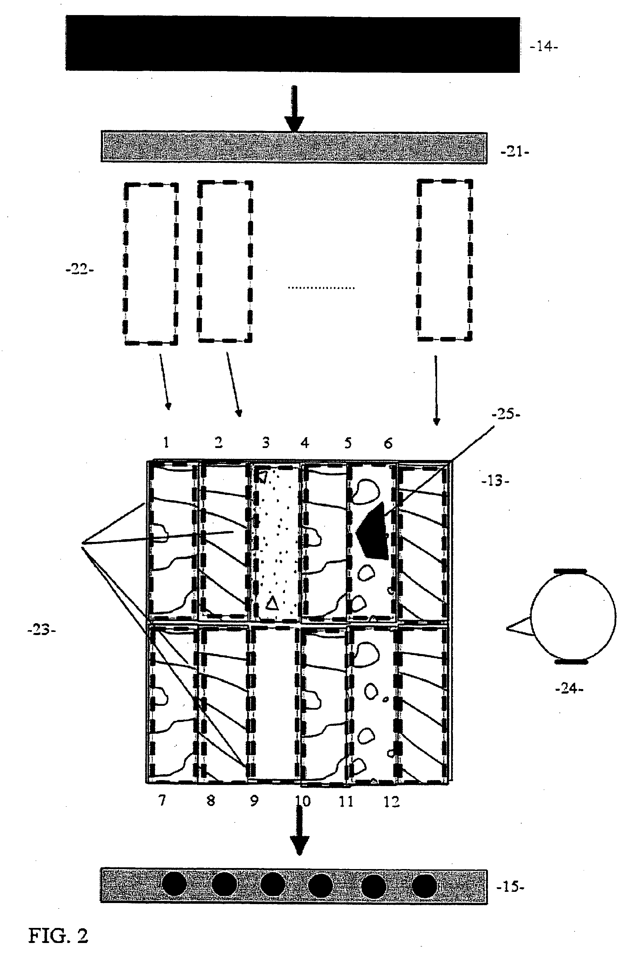

Fig. 2 shows a light pattern projector -21- placed after the inspection system -14- and illuminating the fullboard -12- with light patterns -22- in such a way that the outlines -23- of the twelve planks become visible to the manual fall-back inspector -24- inspecting the optically patterned fullboard for physical and aesthetical defects in the later to be produced planks, here as an example a contamination -25- on plank position #5 .

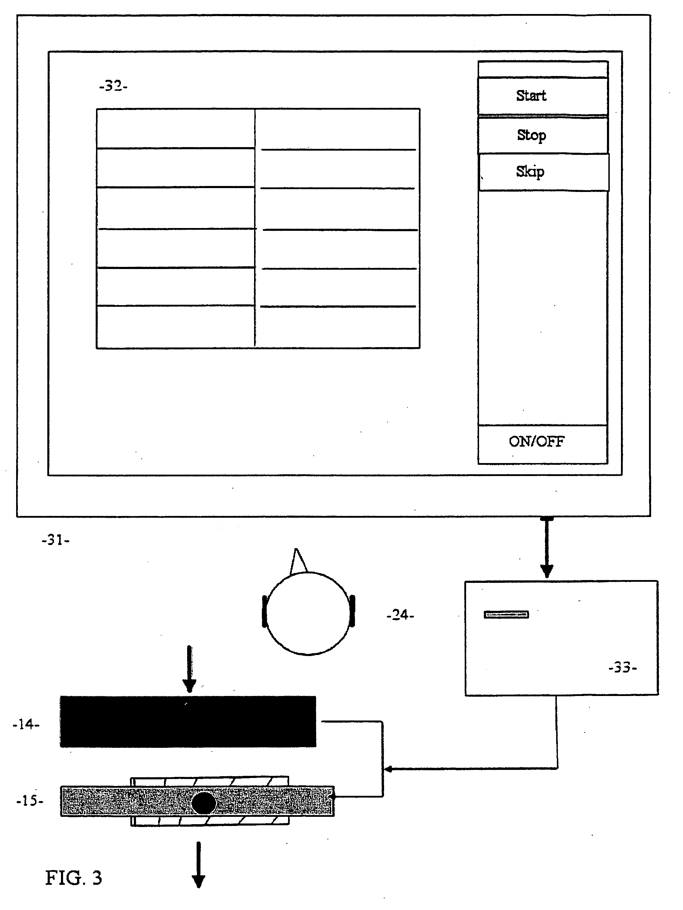

Fig.3 shows a touch-screen data entry device -31- enabling the fall-back inspector -24- to mark the bad quality plank -32- on the schematic fullboard displayed on the screen by pressing the appropriate case and to communicate the identifier of the bad quality plank via the associated computer -33- to the ink-jet marking system -14- which triggers the appropriate ink-jet to mark the fullboard by overriding the signal from the broken-down automatic inspection system -15-.

This explanation uses the specific example of a laminate flooring production for the sake of simplicity. The idea of the invention applies however to all automatic surface inspection systems where the inspection occurs at a production step, where the larger inspected product is not yet divided into the smaller parts shipped to the customer and where the automatic surface inspection system marks the position of the bad smaller parts at their approximate location within the larger inspected product.

Besides laminate flooring planks, such products are f.i. directly printed particle or fibre board panels for the flooring and the furniture industry, extruded or printed resilient webs for flooring tile, large non-woven webs for the production of smaller hygienics or medical products, large ceramic panels for the production of smaller ornamental tiles, natural wood veneers for the production of furniture etc.

The production of laminate floorings starts as shown in fig. 1 with a stack -11- consisting of a wood fibre board, decoration paper printed with f.i. natural wood-like patterns, protection overlay paper, backing paper, the complete stack entering in a precisely aligned way the press -12-. It sorts from the press as a solid panel called the "fullboard" -13- , which shows on the upper surface the veining of natural wood planks. The fullboard is scanned by an automatic camera-based inspection systems and the location of a defect is marked on the relevant plank with a marking system -15- using a number of marking devices such as ink-jet nozzles. The marked fullboard is divided in the later production step -16- by a saw into f.i. twelve planks (6 columns, 2 rows) which are then automatically sorted by an ejection gate -18- triggered by the mark sensor -17- which divides the planks in a flow of bad quality -19- and good quality -20- which is automatically packed and shipped.

The outlines and arrangement of these say 12 planks on the fullboard are in general not clearly visible for a manual inspector due tp the quite similar and confusing wood patterns all over the fullboard . A computerized automatic inspection system -14- however knows from a data base exactly the position of the planks within the fullboard and can therefore, in case of detection of a local defect such as a contamination, a scratch, missing overlay etc. mark with an arrangement of ink-jet nozzles -15- precisely only those zones of the fullboard which correspond to bad quality planks. The ink-jet often uses ultraviolet fluorescent ink for marking the planks either on the upper or back side and an UV sensitive optical detector at the plank sorting gate -18-.

Once the planks having being cut-out from the fullboard and profiled, they are conveyed one-by-one through a sensing device -17- which looks for the marking and which triggers an ejection gate -18- to dump the bad quality planks -19- whereas the defect-free planks -20- are automatically packed and shipped.

If the automatic inspection system fails, the fullboard is no longer marked. If a manual inspector is placed after the press, he might be able to crudely mark by hand the approximate position of a defect on the fullboard. He is however not able to restrict his marking to the individual bad quality plank, as he is not able to identify the later plank contours within the wood-like pattern of the fullboard. This leads to the need, that not only the automatic inspection system of the fullboard is backed-up by a manual inspector, but that also the sensor-ejector arrangement after the profiling is backed up by a manual inspector able to take off the planks crudely marked by the back-up inspector posted after the broken-down automatic inspection system.

Another drawback of this doubly-manual backup is the missing production quality data generated by automatic inspection systems right after the error-prone press. This data can be used to control the absolute number of fullboards to be produced for an order defined as a given number of defect-free planks (number of square-meters of defect-free planks). If the automatic inspection system breaks down, this data cannot be produced by the back-up manual inspector, as he does not know precisely how many bad planks he has marked.

It is therefore an important economical advantage to provide for a back-up solution for automatic inspection systems which leads to an unchanged, ongoing marking of the defect planks within the fullboard surface, to the on-going generation of the number of produced defect-free planks and which does not require more then one manual back-up inspection post.

The basic idea of the invention is illustrated in Fig. 2. When the fullboard -13- leaves the automatic inspection system, it passes through a manual inspection post -24- positioned between the inspection system -14- and the marking system -15-. A light pattern projector -21- is fixed above the fullboard to project a highly contrasting light pattern -22- onto the wood-like surface of the fullboard. This light pattern is geometrically positioned and defined in such a way, that it optically traces the outlines -23- of the planks on the fullboard. Typically the light pattern will consists of transverse and lengthwise lines tracing the poorly visible contours of the planks in a way that they will be well perceived by the human eye.

If the fullboard can be brought to a halt at the manual back-up inspection post -24-, the light pattern generator can be very simple, comprising just a number of cross and length laser-line projectors. If the fullboard transportation is not stopped, the light pattern projector must be controlled in such a way as to follow the movement of the fullboard past the manual inspection post. This can be done f.i. by using a galvanometrically controlled laser projector or a numerically controlled LCD or DLP beamer. Such light pattern projectors are state-of-the art knowledge for automation and multimedia experts and need not to be furthermore detailled within this application.

The manual back-up inspector now clearly sees that plank #5 (-24-) has a defect and that all other planks are of good quality. To communicate this information to the marking system, he just needs an electronic data input device to transmit this identifier to the ink-jet marking system -15-.

As shown in fig. 3, it is a preferred embodiment of this invention to use a touch-screen computer monitor -31- for entering this data. The touch-screen will preferably display a graphical sketch -32- of the fullboard with superimposed plank contours. It is then particularly easy for the operator -24- to press manually the particular "plank-button" corresponding to the defect position.

This data generated by the touch-screen computer -33- will override the marking signal of the broken-down inspection system -14- and trigger the marking ink-jet system -15- in exactly the same way the automatic inspection system does when working correctly.

All subsequent operations remain unchanged: the ejection-gate with its associated sensor (-17- and -18-) continue to operate without the need of a manual back-up operator, the number of correctly produced planks is known right after the press operation exactly as if the automatic inspection system worked normally.

The whole automatic inspection process now has an economical fail-safe manual backup support which does not need more than one manual inspector and a low price light pattern projector and data entry device.

It is straightforward to generalize this invention to the fail-safe inspection of other surfaces than laminate floorings. It can be applied to surfaces of any material and leading to any end product as well as to continuous web-type products.

## Claims

1. An automatic visual inspection system for the inspection of a large surface in a production line and for the automatic marking of those zones within the large surface which correspond to smaller sized products produced from this large surface at a later production step, the automatic inspection system being fail-safe with regard to its own failure by an incorporated manual inspection facility which is activated as a back-up inspection means for the detection of at least those physical and esthetical defects which can be detected by the human eye, **characterized by**
- the manual inspection back-up facility being positioned between the automatic inspection system and a marking system,
- a light pattern projector being installed which projects highly contrasting patterns on the large surface to visually outline the geometrical shape of the smaller sized products produced from the larger surface at a later production step,
- a data entry device by which a manual inspector can electronically enter an identification of a particular small product location hit with a defect within the large surface being inspected,
- a connection from the data entry device to the marking system to generate signals to trigger the marking device in replacement of the broken-down automatic inspection system, so that the large surface continues to be marked in the same way as with a correctly operating automatic vision system.

2. The inspection system of claim 1, wherein the pattern produced by the light pattern projector is formed by mutually perpendicular bright lines.

3. The inspection system of claim 1 or claim 2, wherein the light pattern projector includes a computer-driven galvanometric light deflection device.

4. The inspection system of claim 1 or claim 2, wherein the light pattern projector includes a computer-driven electronic beamer.

5. The inspection system according to any of the preceding claims, wherein the spatial position of the pattern being is controlled so as to compensate for positioning inaccuracies of the large surface to be inspected.

6. The inspection system according to any of the preceding claims, wherein the spatial position of the pattern is controlled so as to follow the movement of the large surface to be inspected while being conveyed past the visual inspection facility.

7. The inspection system according to any of the preceding claims, wherein the data entry device is a touch-screen connected to a computer.

8. The inspection system according to any of the preceding claims, wherein the large surface to be inspected is a laminated fullboard for the production of laminated flooring planks.

9. The inspection system according to any of claims 1 to 8, wherein the large surface to be inspected is a directly printed fullboard for the production of flooring planks.

10. The inspection system according to any of claims 1 to 8, wherein the large surface to be inspected is the surface of panels from which furniture elements are produced.

11. The inspection system according to any of claims 1 to 8, wherein the large surface to be inspected is a resilient, PVC, linoleum, rubber or textile surface from which flooring tiles are produced.

12. The inspection system according to any of claims 1 to 8, wherein the large surface to be inspected is the surface of a ceramic body from which ceramic tiles are produced.

13. The inspection system according to any of claims 1 to 8, wherein the large surface to be inspected is the surface of a metallic product from which smaller products are produced.

14. The inspection system according to any of the preceding claims, wherein the marking device is a multiple-nozzle ink sprayer.

15. The inspection system according to any of claims 1 to 13, wherein the marking device is a label dispenser.

## Amended claims

### Amended claims in accordance with Rule 86(2) EPC.

**1.** An automatic visual inspection system (14) for the inspection of a large surface (13) in a production line and for the automatic production of markers on those zones within the large surface (13) which correspond to smaller sized products (19, 20) produced from this large surface (13) at a later production step and that have been inspected as being defective, the automatic inspection system (14) being fail-safe with regard to its own failure by an incorporated manual inspection facility (24) which is activated as a back-up inspection means for the detection of at least those physical and esthetical defects which can be detected by the human eye, **characterized by**
- the manual inspection back-up facility (24) being positioned between the automatic inspection system (14) and a marking system (15),
- a light pattern projector (21) being installed which projects highly contrasting patterns (22) on the large surface (13) to visually outline the geometrical shape of the smaller sized products (19, 20) produced from the larger surface (13) at a later production step (16),
- a data entry device (31, 32, 33) by which a manual inspector (24) can electronically enter an identification of a particular small product location hit with a defect within the large surface (13) being inspected,
- a connection from the data entry device (31, 32, 33) to the marking system (15) to generate signals to trigger the marking device (15) in replacement of the broken-down automatic inspection system (14), so that the large surface (13) continues to be marked in the same way as with a correctly operating automatic vision system.

**2.** The inspection system of claim 1, wherein the pattern (22) produced by the light pattern projector (21) is formed by mutually perpendicular bright lines.

**3.** The inspection system of claim 1 or claim 2, wherein the light pattern projector (21) includes a computer-driven galvanometric light deflection device.

**4.** The inspection system of claim 1 or claim 2, wherein the light pattern projector (21) includes a computer-driven electronic beamer.

**5.** The inspection system according to any of the preceding claims, wherein the spatial position of the pattern (22) being is controlled so as to compensate for positioning inaccuracies of the large surface (13) to be inspected.

**6.** The inspection system according to any of the preceding claims, wherein the spatial position of the pattern (22) is controlled so as to follow the movement of the large surface (13) to be inspected while being conveyed past the visual inspection facility.

**7.** The inspection system according to any of the preceding claims, wherein the data entry device (31, 32, 33) is a touch-screen (31) connected to a computer (33).

**8.** The inspection system according to any of the preceding claims, wherein the large surface (13) to be inspected is a laminated fullboard for the production of laminated flooring planks.

**9.** The inspection system according to any of claims 1 to 8, wherein the large surface (13) to be inspected is a directly printed fullboard for the production of flooring planks.

**10.** The inspection system according to any of claims 1 to 8, wherein the large surface (13) to be inspected is the surface of panels from which furniture elements are produced.

**11.** The inspection system according to any of claims 1 to 8, wherein the large surface (13) to be inspected is a resilient, PVC, linoleum, rubber or textile surface from which flooring tiles are produced.

**12.** The inspection system according to any of claims 1 to 8, wherein the large surface (13) to be inspected is the surface of a ceramic body from which ceramic tiles are produced.

**13.** The inspection system according to any of claims 1 to 8, wherein the large surface (13) to be inspected is the surface of a metallic product from which smaller products are produced.

**14.** The inspection system according to any of the preceding claims, wherein the marking device (15) is a multiple-nozzle ink sprayer.

**15.** The inspection system according to any of claims 1 to 13, wherein the marking device (15) is a label dispenser.
